# EUROPEAN PATENT SPECIFICATION

(11) **EP 4 049 421 B1**
(45) Date of publication and mention of the grant of the patent: **29.11.2023**
(21) Application number: 19798554.2
(22) Date of filing: 29.10.2019
(51) Int. Cl.: H04L 49/9015, H04L 49/9057, H04L 49/90

(54) **SYSTEMS AND METHODS FOR SORTING DATA ELEMENTS WITH APPROXIMATION TO O(1)**
SYSTEME UND METHODEN ZUM SORTIEREN VON DATENELEMENTEN MIT ANGLEICHUNG ZU O (1)
SYSTÈMES ET PROCÉDÉS POUR TRIER DES ÉLÉMENTS DE DONNÉES AVEC UNE APPROXIMATION À O (1)

(43) Date of publication of application: 31.08.2022
(73) Proprietor: Huawei Technologies Co., Ltd., Shenzhen, Guangdong 518129 (CN)
(72) Inventor: GAL, Zion, 80992 Munich (DE); ZECHARIA, Rami, 80992 Munich (DE)
(74) Representative: Körber, Martin Hans
(86) International application number: PCT/EP2019/079480
(87) International publication number: WO 2021/083492

(56) References cited:
- WO-A1-2019/140556
- US-A1- 2006 067 325
- US-A1- 2012 215 992
- US-A1- 2014 160 935
- US-B2- 9 055 011

## Description

### BACKGROUND

The present invention, in some embodiments thereof, relates to sorting of data elements and, more specifically, but not exclusively, to systems and methods for approximation to O(1) sorting of data elements.

In various applications (e.g., very large scale integration (VLSI) implementations) a sorter is used, for example, in communication systems, and cores. Stream of elements arrive serially and out of order. Re-ordering the elements is required prior to processing them, where the smallest or largest value element is taken first. Such applications require computationally efficient sorting mechanisms to operate, for example, in real time to handle the incoming stream of data elements.

WO 2019/140556 A1 discloses a message transmission method and an apparatus for implementing said method by dividing messages to be sent into a plurality of groups. Messages in different groups have different source port information, and the header carried by each packet carries a write-to address, of the message, in a memory of a destination server. Using such an approach is such that the message to be sent is divided and forwarded on different paths, thereby increasing the balance of network traffic.

US 2006/067325 A1 discloses a method and apparatus for sorting packets by packet schedulers using a connected trie data structure. According to one embodiment of the invention, the packet scheduler receives a packet on a network and assigns the packet a time stamp value. The packet is inserted into a trie data structure that represents a scheduling horizon and includes a plurality of packets. The packet scheduler transmits the packet over the network based on its sorted order within the trie data structure.

US 9 055 011 B2 discloses a buffer memory that comprises a plurality of memory elements for storing data elements in an order of arrival, wherein the plurality of memory elements have a variable size and wherein each memory element comprises a pointer (such as a next block starting index) to a memory element storing a next data element.

US 2014/160935 A1 discloses a method for packet reassembly and reordering.

US 2012/215992 A1 discloses a scheme for storing a received stream of data elements in a buffer, applying a boundary condition to the data elements stored in the buffer after receiving each individual data element of the stream of data elements, and producing one or more data elements from the buffer based on the boundary condition as an output stream of data elements sorted according to a predetermined order.

### SUMMARY

It is an object of the present invention to provide a network connected device and a method for ordering stream elements each marked with a sequence number.

The foregoing and other objects are achieved by the features of the independent claims. Further implementation forms are apparent from the dependent claims, the description and the figures.

According to a first aspect, a network connected device, comprises: a network interface adapted to receive via a network one or more streams where each stream contains a plurality of stream elements each marked with a sequence number, a storage storing a linked list holding stream elements sorted by their corresponding sequence number and a mapping dataset, the mapping dataset comprises a plurality of dataset addresses each associated with a value and a corresponding pointer pointing to a position in the linked list that holds one of the stream elements, a processing circuitry adapted to add each of the plurality of stream elements to the linked-list by: accessing a first of the plurality of dataset addresses which is equivalent to the respective sequence number, updating a value addressed by the first dataset address when this value is not already updated to indicate a reception of a stream element with the respective sequence number, when a copy of a stream element having the respective sequence number is missing from the linked-list adding a copy of the respective stream element to an ordered position in the linked-list, the ordered position is determined according to the respective sequence number, when a copy of a stream element having the respective sequence number is in the linked-list adding a copy of the respective stream element to a derived position in the linked-list, the derived position is determined according to the ordered position.

According to a second aspect, a method for reordering stream elements received over a network, comprises: receiving a plurality of stream elements each marked with a sequence number and originated from one or more streams, adding a copy of each of the plurality of stream elements to a linked-list such that the copies are sorted by their corresponding sequence number, the adding is performed by: for each of the plurality of stream elements: access a dataset address of a mapping dataset, the dataset address is equivalent to the respective sequence number, update a value addressed by the dataset address when this value is not already updated to indicate a reception of a stream element with the respective sequence number, when a copy of a stream element having the respective sequence number is missing from the linked-list adding a copy of the respective stream element to an ordered position in the linked-list, the ordered position is determined according to the respective sequence number, when a copy of a stream element having the respective sequence number is in the linked-list adding a copy of the respective stream element to a derived position in the linked-list, the derived position is determined according to the ordered position.

At least some implementations of the network device and/or method described herein provide high performance sorting close to O(1), optionally for a bounded range of values. The high performance is scalable, and maintained, even for very large numbers of stream elements.

With current VLSI technology and within relatively high frequency, several thousands of bits (2K-4K) of the mapping dataset may be searched within 1 clock cycle. For example, an array of 16K bits may be scanned within 4-8 clock cycles. This search time determine the insertion time per one steam element which translates to the performance of the network connected device and/or method performing sorting that is a fixed number of clock cycles regardless of the number of stream elements in the list.

In a further implementation of the first and second aspects, the derived position is selected such that the copy of the respective stream element is the furthest element having the respective sequence.

In a further implementation of the first and second aspects, the mapping dataset is one of a plurality of mapping datasets and the plurality of stream elements are members of a sub group of a group of stream elements, wherein the processing circuitry is adapted to select a first of the plurality of mapping datasets, the first mapping dataset includes a database address that is equivalent to the respective sequence number, wherein the mapping dataset is the first mapping dataset.

In a further implementation of the first and second aspects, the value is a bitwise value and the mapping dataset is a bitmap.

In a further implementation of the first and second aspects, the bitmap is implemented by registers.

The search in the mapping dataset (e.g., bitmap array) determines the insertion speed which in turn determines the performance of the network connected device performing the sorting. To achieve best performance, the mapping dataset (e.g., bitmap array) may be implemented for example using registers, and not necessarily RAM, such that all bits (e.g., of the register) are visible simultaneously for the search. With current VLSI technology and within relatively high frequency, several thousands of bits (2K-4K) of the mapping dataset may be searched within 1 clock cycle. For example, an array of 16K bits may be scanned within 4-8 clock cycles. This search time determine the insertion time per one steam element which translates to the performance of the network connected device performing sorting that is a fixed number of clock cycles regardless of the number of stream elements in the list.

In a further implementation of the first and second aspects, the dataset address is associated with a pointer to the ordered position or the derived position.

The processing circuitry may comprise hardware and software. The hardware may comprise analog circuitry or digital circuitry, or both analog and digital circuitry. Digital circuitry may comprise components such as application-specific integrated circuits (ASICs), field-programmable arrays (FPGAs), digital signal processors (DSPs), or general-purpose processors. In one embodiment, the processing circuitry comprises one or more processors and a non-transitory memory connected to the one or more processors. The non-transitory memory may carry executable program code which, when executed by the one or more processors, causes the apparatus to perform the operations or methods described herein.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1A is a schematic of a communication system, including multiple switches connected to each other in order to allow multiple nodes to communicate with each other, to help understand some embodiments of the present invention;
FIG. 1B is a schematic of communication system, depicting a fast path connecting between two end nodes, and a slow path connecting between the two end nodes, to help understand some embodiments of the present invention;
FIG. 2 is a schematic depicting a process for measuring time variance of a network by number of packets, to help understand some embodiments of the present invention;
FIG. 3 is a block diagram of components of a system for ordering a sequence of stream elements, in accordance with some embodiments of the present invention;
FIG. 4 is a flowchart of a method for ordering a sequence of stream elements, in accordance with some embodiments of the present invention;
FIG. 5 is a schematic of an exemplary implementation of the mapping dataset as bitmap dataset and pointer dataset, and linked list, in accordance with some embodiments of the present invention;
FIG. 6 is a schematic depicting the state of the sorted list and the mapping dataset before a new stream element with sequence number = 100 arrives and after the stream element with sequence number 100 is inserted, in accordance with some embodiments of the present invention;
FIG. 7 is a schematic depicting the state of the sorted list and the mapping dataset before a new stream element with sequence number = 150 arrives and after the stream element with sequence number 150 is inserted, in accordance with some embodiments of the present invention;
FIG. 8 is a schematic depicting the state of the sorted list and the mapping dataset before a new stream element with sequence number = 10 arrives and after the stream element with sequence number 10 is inserted at the head of the list, in accordance with some embodiments of the present invention;
FIG. 9 is a depicting the state of the sorted list and the mapping dataset before a new stream element with sequence number = 250 arrives and after the stream element with sequence number 250 is inserted at the end of the list, in accordance with some embodiments of the present invention; and
FIG. 10 is a schematic depicting a search for insertion of the new stream element, in accordance with some embodiments of the present invention.

### DETAILED DESCRIPTION

The present invention, in some embodiments thereof, relates to sorting of data elements and, more specifically, but not exclusively, to systems and methods for approximation to O(1) sorting of data elements.

An aspect of some embodiments of the present invention relates to a network connected device, systems, methods, an apparatus, and/or code instructions (stored on a memory for execution by one or more hardware processors) for sorting of data elements. One or more streams are received, where each stream contains multiple stream elements each marked with a sequence number. The stream elements may be, for example, packets traversing over a network, and/or instructions for execution such as within multiple processing cores. The stream(s) may be received, for example, by a network interface that receives the stream(s) from a network. A linked list holds stream elements sorted by their corresponding sequence number. The mapping dataset includes multiple dataset addresses each associated with a value, and a corresponding pointer pointing to a position in the linked list that holds one of the stream elements. The linked list and the mapping dataset may be stored in a storage device. Each of the stream elements is added to the linked-list, optionally by processing circuitry, by accessing a first of the dataset addresses which is equivalent to the respective sequence number of the respective stream element being added. A value addressed by the first dataset address is updated when this value is not already updated. The update is to indicate a reception of a stream element with the respective sequence number. When a copy of a stream element having the respective sequence number is missing from the linked-list, a copy of the respective stream element is added to an ordered position in the linked-list. The ordered position is determined according to the respective sequence number. When a copy of a stream element having the respective sequence number is in the linked-list, a copy of the respective stream element is added to a derived position in the linked-list. The derived position is determined according to the ordered position.

At least some implementations of the network device and/or method described herein provide high performance sorting close to O(1), optionally for a bounded range of values. The high performance is scalable, and maintained, even for very large numbers of stream elements.

The derived position may be selected such that the copy of the respective stream element is the furthest element having the respective sequence.

The mapping dataset may include a bitmap, with the value implemented as a bitwise value. The bitmap may be implemented by registers. The register implementation may make the data of the mapping dataset visible simultaneously for searching, for example, all bits of the bitmap visible simultaneously for searching. With current VLSI technology and within relatively high frequency, several thousands of bits (2K-4K) of the mapping dataset may be searched within 1 clock cycle. For example, an array of 16K bits may be scanned within 4-8 clock cycles. This search time determine the insertion time per one steam element which translates to the performance of the network connected device performing sorting that is a fixed number of clock cycles regardless of the number of stream elements in the list.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

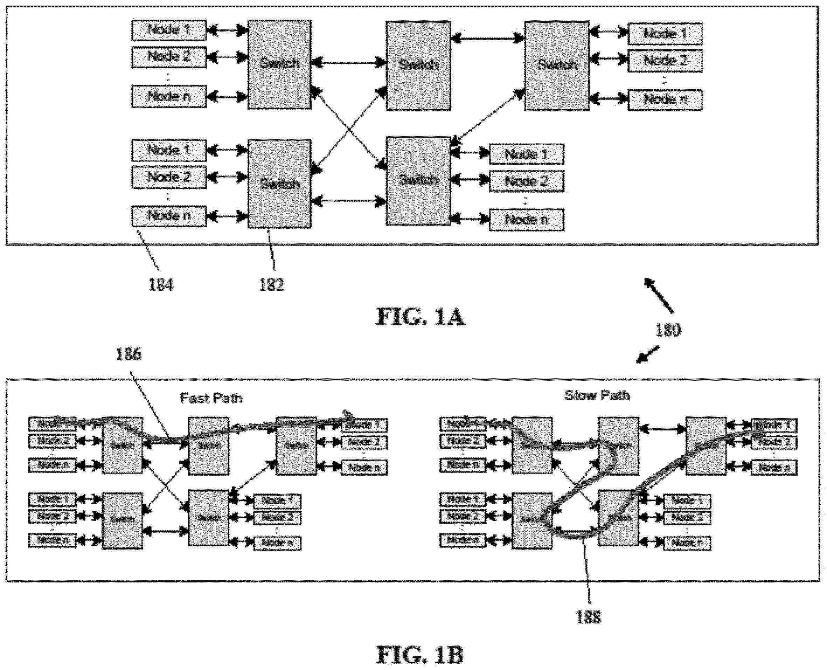

Reference is now made to FIGs. 1A-1B, which are schematics depicting an exemplary application of the network connected sorting device, in accordance with some embodiments of the present invention.

FIG. 1A is a schematic of a communication system (e.g., network) 180, including multiple switches (one switch 182 marked as an example) connected to each other in order to allow multiple nodes (one node 184 marked as an example), for example, computers, work stations, data storage devices/arrays, and network interfaces, to communicate with each other, to help understand some embodiments of the present invention.

FIG. 1B is a schematic of communication system 180, depicting a fast path 186 connecting between two end nodes, and a slow path 188 connecting between the two end nodes, to help understand some embodiments of the present invention. A connection set between any two nodes (sometimes referred to as a flow) through the network is identified with a unique data value stored within each transmitted packet (sometimes referred to as 5-tuple). Multiple flows can exist simultaneously between any two nodes. Multiple paths exist between nodes, however, conventional in networks, a flow traverses the network using the same path for all its packets to maintain the ordering of the transmitted packets at the destination. Sending packets of the same flow through multiple paths creates more balanced network which provides for more throughput and less latency however at the cost of un-ordered arrival of packets at the destination due to different paths delay/length within the network as depicted by comparing fast path 186 with slow path 188. When allowing the usage of multiple paths for packets from source to destination, the destination node is required to re-order arriving packets to the same transmission order prior to using them. Some implementations of the network connected device, systems, methods, apparatus, and/or code instructions described herein, may be implemented for re-ordering the arriving packets (where the stream of elements described herein includes the stream of arriving packets).

In some implementations, the reordering mechanism is based on each network node source attaching a sequence number to every delivered packet. A sequence number (SN) is unique per packet and is incremented on each packet sent. The sequence numbers on each received packets are used to revert the received packets back to their original order, as described herein.

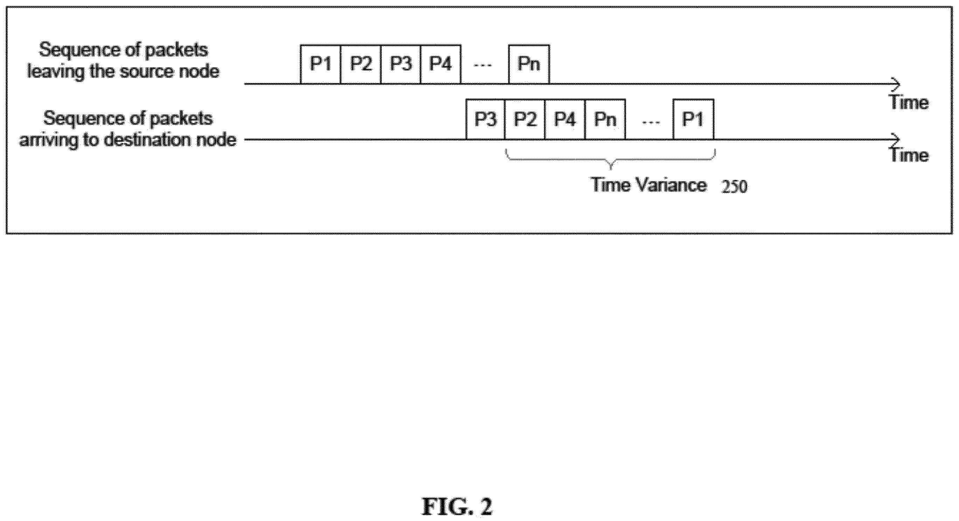

Reference is now made to FIG. 2, which is a schematic depicting a process for measuring time variance 250 of a network by number of packets, to help understand some embodiments of the present invention. The size of the sequence number may be in the order of the maximum variance 250 of the network. Maximum variance represents the maximum possible arrival time gap between a packet traversing through the fastest path in the network to the destination and a packet traversing through the slowest path.

Arriving packets may be sorted based on their attached sequence number to retrieve the original sequence. When a packet with the minimum sequence number, equal to the expected sequence number, may be considered the first in order and may be used. When removing packets out of the sorter at their original sequence, the amount of packets remaining in the sorter may be at the order of the time variance 250. The sorter may operate on a sliding window of observed packets. The minimum sequence number value within the sorter is increased when elements are taken out of the sorter.

The expected sequence number may be a number denoting the next expected in-order sequence number. The synchronization of the expected sequence number between the sender network node and the receiving network node may be implemented using different processes.

At least some implementations of the network connected device, systems, methods, apparatus, and/or code instructions described herein that sort stream elements provide improvements over existing sorting processes, by enabling high performance processing close to O(1), which is scalable and maintained even for very large numbers of stream elements. The following are some examples of existing sorting processes:
* A Naive search process, operates by, for any arriving element a search starts from the first element in the list (containing the minimum sequence value) up to the end of the list. The new arriving element is inserted between 2 elements where the previous element's sequence number is smaller than the arriving sequence number and the next element's sequence number is higher than the arriving sequence number. The Naive search process operates by a long insertion time, on the order of O(logM), where M denotes the number of sequence elements.
* A binary tree search process uses a balanced binary tree. The binary tree is required to be balanced at all times, which is a tedious long processing that makes the binary tree search complex with degraded insertion performance.
* A systolic array contains cells for each element where a cell contains storage for the element's information comparison logic. Practical implementation of the systolic requires significant amount of hardware resources, which makes it impractical for large values of M due to poor scalability. Each cell stores the element's database in a dedicated register (a memory is not usable) and each cell contains a comparator.

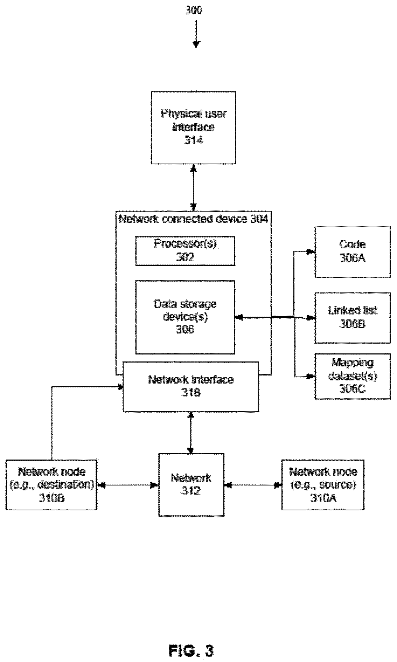

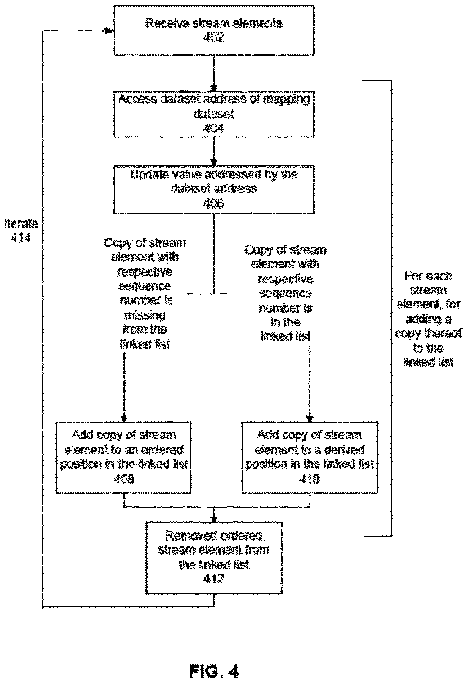

Reference is now made to FIG. 3, which is a block diagram of components of a system 300 for ordering a sequence of stream elements, in accordance with some embodiments of the present invention. Reference is also made to FIG. 4, which is a flowchart of a method for ordering a sequence of stream elements, in accordance with some embodiments of the present invention. System 300 may implement the features of the method described with reference to FIG. 4 and/or other methods described with reference to other FIGs herein, by hardware processor(s) 302 of a network connected device 304 executing code 306A stored in a data storage device 306.

Network connected device 304 receives stream elements, optionally via a network interface 318 connected to a network 312. Network interface 318 is adapted to receive via network 312, one or more streams, where each stream contains multiple stream elements, each stream element marked with a sequence number.

Stream elements may flow over network 312, for example, from a source network node 310A to a destination node 310B. The ordered stream elements may be used by destination network node 310B. It is noted that in two way communication, network node 310A may act as the destination when network node 310B acts as the source.

Network connected device 304 may be implemented as, for example one or more and/or combination of a network node, a router, a bridge, a switch, a network administration server, a network gateway, a group of network connected devices, a client terminal, a server, a virtual server, a computing cloud, a virtual machine, a desktop computer, a thin client, a network node, a network server, and/or a mobile device (e.g., a Smartphone, a Tablet computer, a laptop computer, a wearable computer, glasses computer, and a watch computer).

Network connected device 304 may be implemented to intercept the stream elements from network 312 prior to reaching network node 310B. Network connected device 304 may be implemented as a component of destination network node 310B (and/or network node 310A when acting as the destination), for example, as a hardware component connected to network node 310B, and/or as code stored on network node 310B for execution by a processor of network node 310B.

Hardware processor(s) 302 of network connected device 304 may be implemented, for example, as a central processing unit(s) (CPU), a graphics processing unit(s) (GPU), field programmable gate array(s) (FPGA), digital signal processor(s) (DSP), and application specific integrated circuit(s) (ASIC). Processor(s) 302 may include a single processor, or multiple processors (homogenous or heterogeneous) arranged for parallel processing, as clusters and/or as one or more multi core processing devices.

Data storage device(s) 306 may be implemented, for example, as a memory, random access memory (RAM), read-only memory (ROM), and/or a storage device, a local hard-drive, virtual storage, a removable storage unit, an optical disk, a storage device, a remote server and/or computing cloud (e.g., accessed using a network connection), non-volatile memory, magnetic media, semiconductor memory devices, hard drive, removable storage, and optical media (e.g., DVD, CD-ROM). Data storage device(s) 306 store code 306A, linked list 306B, and mapping dataset(s) 306C.

Data storage device(s) 306 stores linked list 306B holding stream elements sorted by their corresponding sequence number. Data storage device(s) 306 stores mapping dataset(s) 306C that includes multiple dataset addresses each associated with a value, and a corresponding pointer pointing to a position in the linked list 306B that holds one of the stream elements.

Processor(s) 302 is adapted to add each of the stream elements to the linked-list 306B, as described herein.

Network 312 may be implemented as, for example, the internet, a local area network, a virtual network, a wireless network, a cellular network, a local bus, a point to point link (e.g., wired), and/or combinations of the aforementioned. Network 312 may be implemented as internal connections between processing cores.

Network interface 318 for connecting to network 312 may be implemented as, for example, one or more of, a network interface card, a wireless interface to connect to a wireless network, a physical interface for connecting to a cable for network connectivity, a virtual interface implemented in software, network communication software providing higher layers of network connectivity, a local connection for connecting to internal connections between processing cores, and/or a network packet sniffer for intercepting packets on the network.

Network connected device 304 may include and/or be in communication with one or more physical user interfaces 314 that include a mechanism for user interaction, and/or for presenting data. Exemplary physical user interfaces 314 include, for example, one or more of, a touchscreen, a display, gesture activation devices, a keyboard, a mouse, and voice activated software using speakers and microphone.

Each of network nodes 310A-B may be implemented as, for example, a client terminal, a server, a virtual server, a network server, a web server, a virtual machine, a thin client, and a mobile device. It is noted that two network nodes are shown for simplicity, but it is understood that a larger number of network nodes may be implemented, and that the network may include a large number of components with multiple possible interconnected networks.

Referring now back to FIG. 4, at 402, multiple stream elements are received. Each stream element is marked with a sequence number, and originated from one or more streams. More than one element may have the same sequence number. The number of elements to sort may be very large. The stream elements are ordered according to their sequence number, as described herein.

The sequence number may be of bounded range.

A stream element may be defined as an entity which may be linked to the linked list when it is exists.

A stream element may referred to by its address, for example, denoted as 0 - K-1.

A stream element may include its sequence number and a pointer to the next stream element in the linked list.

A stream element may also include other any required information for the stream element itself, according to the implementation application.

One or more of features 404-410 are implemented for each of the stream elements, for adding a copy of the respective stream element to the linked-list, such that the copies are sorted by their corresponding sequence number.

At 404, a dataset address of the mapping dataset is accessed. The dataset address is equivalent to the respective sequence number of the stream element being added to the linked list. A first of the dataset addresses which is equivalent to the respective sequence number, is accessed.

The dataset address is associated with a pointer to the ordered position as described with reference to 408, or the derived position as described with reference to 410.

The mapping dataset may be implemented a bitmap (e.g., array), and the value may be implemented as a bitwise value. The bitmap may be implemented by registers. A pointer dataset (e.g., array) may correspond to the bitmap array. A valid entry of the bitmap array may be a pointer to an address of a stream element linked in the linked list. A pointer to the bit map may indicate the starting point of the bit map.

Optionally, the size of the mapping dataset (e.g., bitmap and/or pointers dataset) is equal to the entire range of the sequence numbers, while the linked list may include more stream elements than the range of the sequence numbers when multiple stream elements of the same sequence number are stored. For example, for a sequence number range of 16K, the mapping dataset (e.g., bitmap array and the pointers array) each have 16K entries. The number of stream elements may be more than 16K when multiple stream elements may include the same sequence number.

The following is an exemplary implementation of the mapping dataset, based on the bitmap dataset and/or pointer dataset. When the position (i.e., address) denoted *i* in the bitmap is set to 1, the corresponding position in the pointer array (*i*) is valid and points to the steam element in the linked list with sequence number = *i.* When the position (address) *i* in the bitmap is set to 0, the corresponding position in the pointer array (*i*) is not valid and does not point to any stream element in the linked list. When there are multiple elements with the same sequence number value, the pointer array points to the last element containing the same sequence number.

The following is an exemplary implementation of the pointer of the mapping dataset. The pointer may be used (together with the expected sequence number value) in implementations where stream elements are taken out from the sorter while elements arrive to the network connected device (also referred to herein as *sorter*) to be sorted as described herein. The pointer to the arrays indicates the location of the stream element with the smallest sequence number at the time, meaning the starting point of the sorting. At the beginning, the pointer points to location 0 of the dataset (e.g., bitmap and/or pointer arrays). Once the first stream element is removed, the pointer moves to the next location in the mapping dataset and this location is now considered to be the beginning of the mapping dataset, while all previous locations up to 0 are now considered as the end of the mapping dataset, being implemented like a sliding window. The expected sequence number is associated with this location as the expected sequence number represents the minimum value in the sorted list. New arriving elements enter the sorter based on their relative distance to the expected sequence number (correlated to the Start pointer). In cases where only sorting is implemented, the Start pointer may be set to 0 and the expected sequence number may be set to the minimum sequence number. For extracting from the list the stream elements with the minimum value of sequence number while new stream elements arrive.

The following is a mathematical representation of an exemplary implementation of the linked list and mapping dataset, where *M* denotes the sequence number (range of 0 to *M*-1):

Linked list: *K* x [log(*K*) + log(*M*)], where *K* denotes number of stream elements participating in the sorting, where *K*≥*M.* The width contains the pointer to the next stream element (size is log(*K*)) and the value of the sequence number of the stream element (size is log(*M*)). Registers: RdP, WrP, Empty (to control the linked list). Pointer array: *M* x log(*M*). Bitmap array: *M* x 1. Register: pointer to starting point of the array.

Optionally, the mapping dataset is one of multiple mapping datasets, and the stream elements are members of a sub group of a group of stream elements. In such a case, the processing circuitry may be adapted to select a first of the mapping datasets, where the first mapping dataset includes a database address that is equivalent to the respective sequence number. The mapping dataset described herein is the first mapping dataset, which is selected.

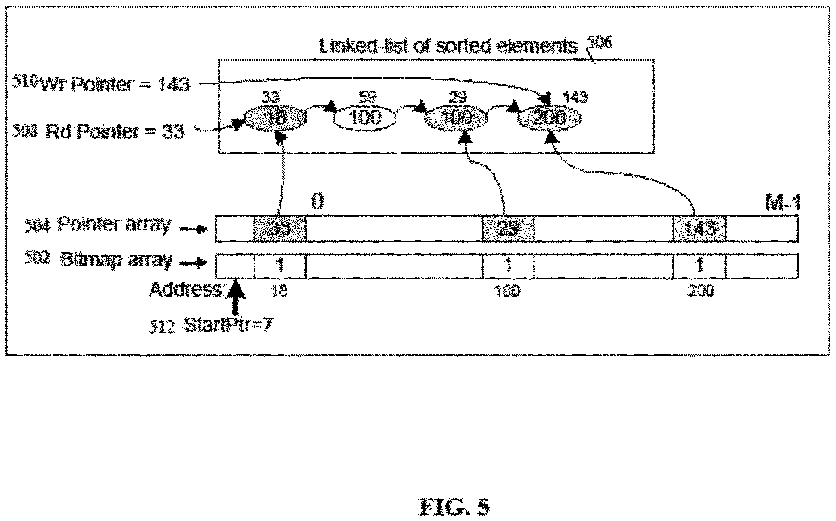

Reference is now made to FIG. 5, which is a schematic of an exemplary implementation of the mapping dataset as bitmap dataset (e.g., array) 502 and pointer dataset (e.g., array) 504, and linked list 506, in accordance with some embodiments of the present invention.

A read pointer 508 points to address 33, which is stream element 33 with sequence number =18, and stream element 33 with sequence number = 18 points to address (i.e., stream element) 59 with sequence number =100 and so on as shown. Address 18 in bitmap dataset 502 is set to 1 which indicates that address 18 in the pointer array 504 is valid. Validity indicates that there is at least one stream element in the linked list with sequence number =18. The pointer has the value 33 which is the address of the element in the linked list 506 containing sequence number =18. Address 100 in the bitmap dataset 502 is set to 1, which indicates that address 100 in the pointer array 504 is valid. Validity indicates that there is at least one stream element in the linked list 506 with sequence number =100. The pointer has the value 29 which is the address of the last element in the linked list 506 containing sequence number=100. Furthermore, a start pointer 512 is at location 7 which indicates that the bitmap array 502 starts at location 7 and ends at location 6. This in turn indicates that the minimum sequence number is expected at location 7 with a value equal to expected sequence number. Locations 0-6 are considered as the extension following location M-1.

At 406, a value addressed by the first dataset address is updated when this value is not already updated to indicate a reception of a stream element with the respective sequence number. Optionally, when the mapping dataset is implemented as a bitmap, the value is changed from zero to one.

At 408, when a copy of a stream element having the respective sequence number is missing from the linked-list (e.g., the corresponding bit in the bitmap dataset is set to zero), a copy of the respective stream element is added to an ordered position in the linked-list. The ordered position is determined according to the respective sequence number.

When there is no pointer to point to the exact insertion position in the linked list, a search may be performed in order to find the first valid pointer (e.g., location containing 1 in the bitmap dataset) before the location starting at #Seq. This search may start in the bitmap starts from address = sequence number, and continue towards address 0. For example: When (Start Pointer ≤ (sequence number - expected sequence number)), then search starts from sequence number towards address 0 and ends at start pointer. When (Start Pointer > (sequence number - expected sequence number)), then search starts from address sequence number towards address 0 and then from address M-1 to address Start Pointer. When the location is found, the new stream element is inserted in the linked list after the stream element pointed to by the found location. When location is not found (e.g., up to address 0 of the bitmap array), the new stream element may be inserted at the head of the linked list.

Alternatively, at 410, when a copy of a stream element having the respective sequence number is in the linked-list, (e.g., the corresponding bit in the bitmap dataset is set to 1), a copy of the respective stream element is added to a derived position in the linked-list. The derived position is determined according to the ordered position.

The derived position may be selected such that the copy of the respective stream element is the furthest element having the respective sequence.

The new sequence element may be inserted in the linked list after the sequence element that is pointed to from address corresponding to the sequence number of the pointer array and the pointer array changes to point to the new inserted element.

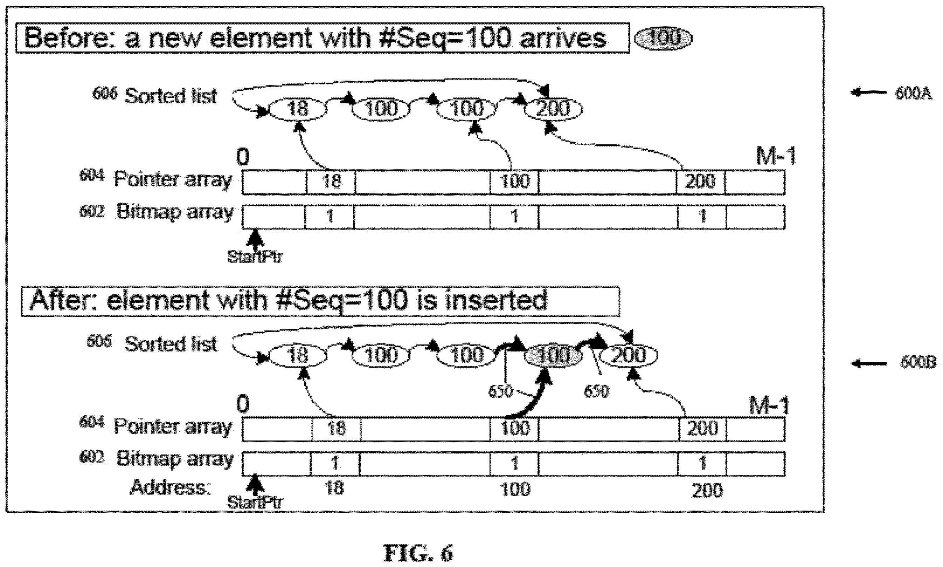

Reference is now made to FIG. 6, which is a schematic depicting the state of sorted list 606 and the mapping dataset (implemented as bitmap array 602 and pointer array 604) before a new stream element with sequence number = 100 arrives 600A and after the stream element with sequence number 100 is inserted 600B, in accordance with some embodiments of the present invention. Sorted list 606 at 600A already includes two steam elements with sequence number 100, prior to the arrival of the new stream element with same sequence number 100 for insertion. The insertion of a new element may change the read and/or write pointers of the linked list when the element is inserted to the beginning or to the end of the list. Bolded arrows 650 indicate the changes to the linked list 606 in 600B. The new stream element having sequence number 100 is inserted into linked list 606 into a position after the existing two stream elements with the same sequence number of 100. The pointer of the mapping dataset (i.e., 602 and 604) is updated from the second instance of the stream element with sequence number of 100 to the new third instance of the steam element with sequence number of 100 inserted into linked list 606.

It is noted that in FIGs 6-9, the numbers in the circles within the linked list (e.g., 606) are the values of the sequence number of the stream elements and not their address.

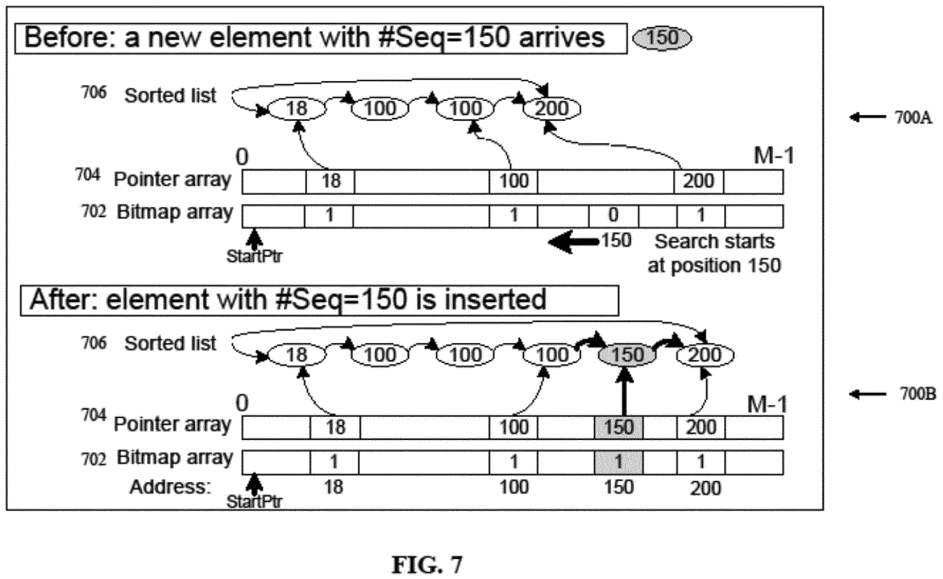

Reference is now made to FIG. 7, which is a schematic depicting the state of sorted list 706 and the mapping dataset (implemented as bitmap array 702 and pointer array 704) before a new stream element with sequence number = 150 arrives 700A and after the stream element with sequence number 150 is inserted 700B, in accordance with some embodiments of the present invention. At 700A, linked list 706 does not include stream element with sequence number 150. The value of address 150 in bitmap array 702 is updated to one, and the corresponding pointer in pointer array 704 points to the newly inserted stream element with sequence number 150.

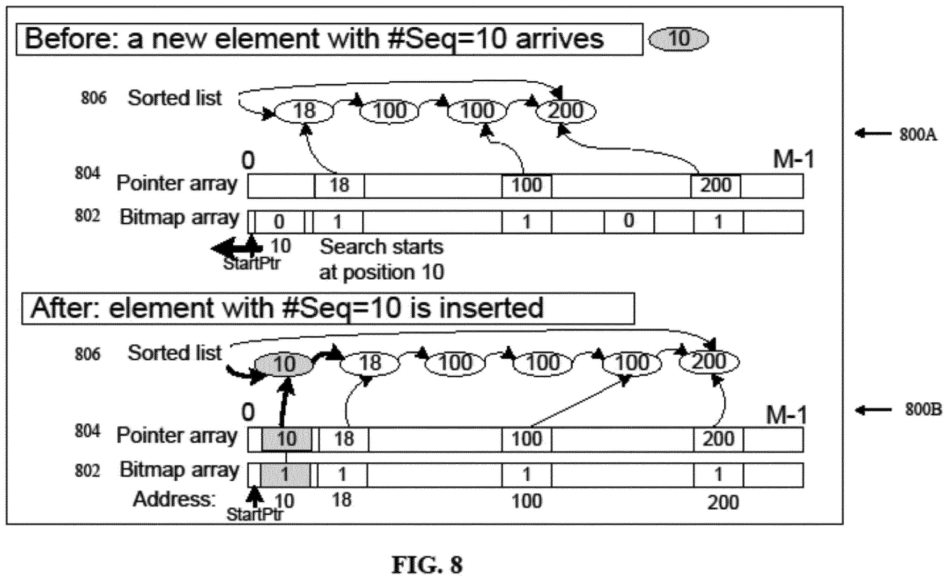

Reference is now made to FIG. 8, which is a schematic depicting the state of sorted list 806 and the mapping dataset (implemented as bitmap array 802 and pointer array 804) before a new stream element with sequence number = 10 arrives 800A and after the stream element with sequence number 10 is inserted 800B at the head of list 806, in accordance with some embodiments of the present invention. At 800A, linked list 806 does not include stream element with sequence number 10. The value of address 10 in bitmap array 802 is updated to one, and the corresponding pointer in pointer array 804 points to the newly inserted stream element with sequence number 10, which is inserted at the head of linked list 806.

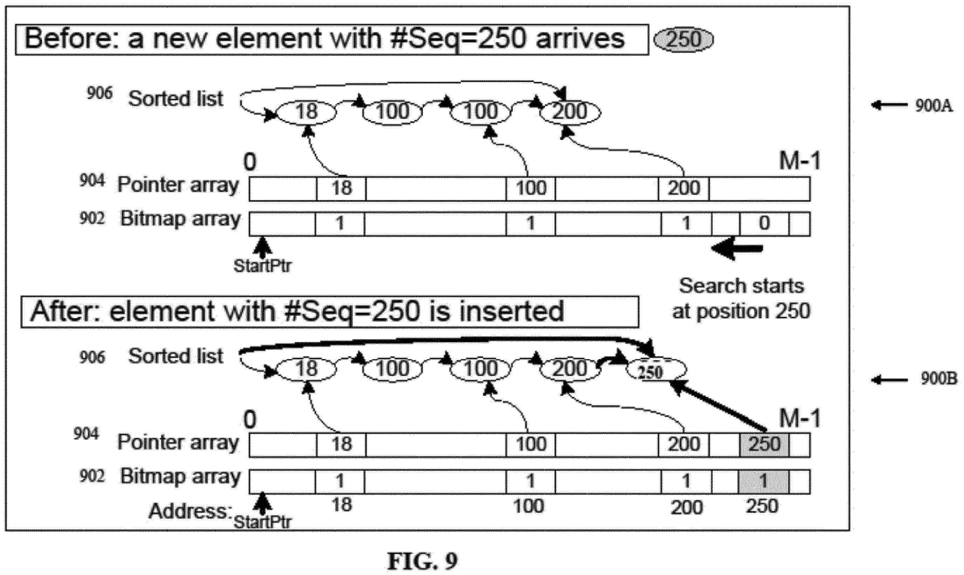

Reference is now made to FIG. 9, which is a schematic depicting the state of sorted list 906 and the mapping dataset (implemented as bitmap array 902 and pointer array 904) before a new stream element with sequence number = 250 arrives 900A and after the stream element with sequence number 250 is inserted 900B at the end of list 906, in accordance with some embodiments of the present invention. At 900A, linked list 906 does not include stream element with sequence number 250. The value of address 250 in bitmap array 250 is updated to one, and the corresponding pointer in pointer array 904 points to the newly inserted stream element with sequence number 250, which is inserted at the end of linked list 906.

The following is exemplary pseudo code instructions for execution by the processor(s) when a new stream element with a certain sequence number and optional address is received:

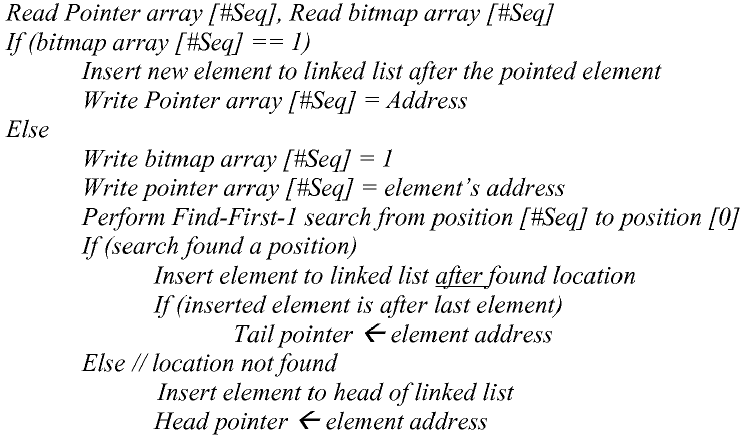

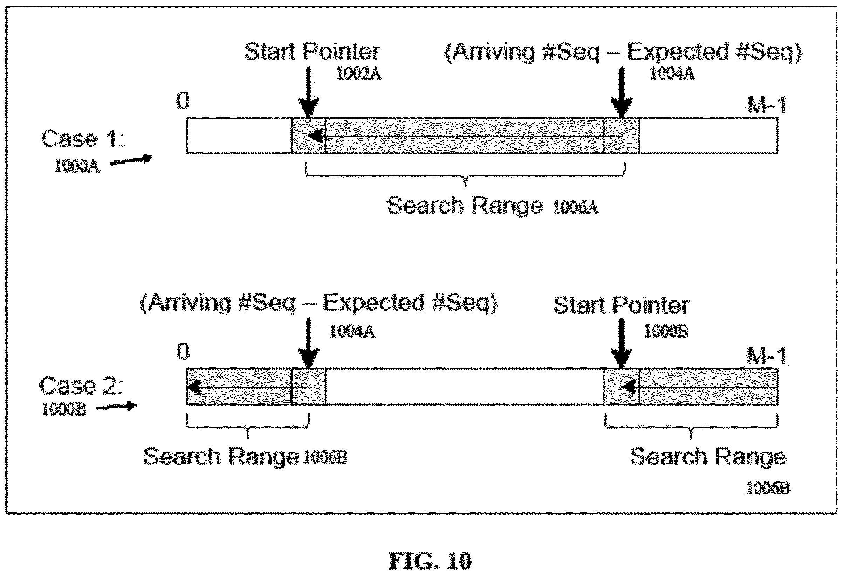

Reference is now made to FIG. 10, which is a schematic depicting a search for insertion of the new stream element, in accordance with some embodiments of the present invention. It is noted that when no search element is necessarily removed from the linked list, sorting is performed (e.g., only sorting may be needed), the start pointer is set to 0 and the expected sequence number is set to the minimum sequence number.

The mapping dataset (e.g., bitmap and/or pointers arrays) may serve as a circular array where the starting point changes whenever a stream element is taken out of the sorted linked list.

The search may start from the sequence number of the currently received stream element and ends at the Start pointer which leads to the two cases 1000A and 1000B.

Case 1 (1000A): When (Start Pointer 1002A ≤ (#Seq - Expected#Seq) 1004A), the search starts from (#Seq - Expected#Seq) 1004A towards address 0 and ends at Start pointer 1002A, denoted by search range 1006A.

Case 2 (1000B): When (Start Pointer 1002B > (#Seq - Expected#Seq) 1004B), the search starts from address (#Seq - Expected#Seq) 1004B towards and up to address 0 and then from address M-1 to address Start Pointer 1002B, denoted by search range 1006B.

The search in the mapping dataset (e.g., bitmap array) determines the insertion speed which in turn determines the performance of the network connected device performing the sorting.

To achieve best performance, the mapping dataset (e.g., bitmap array) may be implemented for example using registers, and not necessarily RAM, such that all bits (e.g., of the register) are visible simultaneously for the search.

The search process may be implemented in various ways.

At 412, one or more ordered stream elements are removed from the linked list. The removal of the ordered stream elements may be performed before, after, and/or in parallel to addition of new arriving stream elements.

In order stream elements may be removed from the smallest sequence number.

When steam elements are removed (e.g., from the network connected device and/or linked list) while stream elements arrive (e.g. to the network connected device) for sorting, the following exemplary process may be implemented using the expected sequence number value: The first stream element in the linked list is compared to an expected sequence number. If equal, then this stream element is considered in-order and may leave the linked list. Furthermore, the mapping dataset (e.g., pointers and/or bitmap arrays) are updated accordingly. Once the stream element is removed from the linked list, the expected sequence number is incremented by 1 to indicate the expected sequence number of the next in order stream element (assuming the sequence number is incremented by 1 within each stream element). Incrementing the expected sequence number may only be performed when no other stream elements contain the same sequence number.

The update of the mapping dataset (e.g., bitmap and/or the pointers array) may be as follows: When the extracted stream element has a sequence number which is unique, the corresponding bit in the bitmap array is set to 0. Alternatively, when the extracted stream element has a sequence number which is not unique (i.e., more stream elements in the list contain the same sequence number), no update is needed to the bitmap or to the pointers arrays.

On every clock cycle or whenever a stream element is to be removed from the list, the following exemplary pseudo code may be implemented:

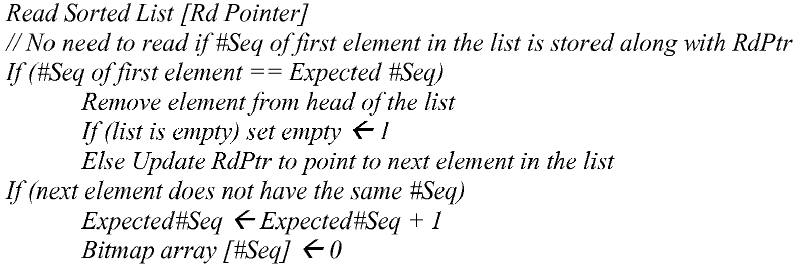

At 414, one or more of 402-412 are iterated, optionally for each one of the stream elements and/or each one of the streams. Iteration of 404-412 is performed for adding a copy of each one of the steam elements to the linked list, such that the copies are sorted by their corresponding sequence number.

Optionally, an expected sequence number which is the first in order stream element to be removed from the linked list is maintained. It may be assumed that all arriving stream elements are with sequence number higher than the expected sequence number.

Optionally, arriving elements are with a sequence number that is incremented over time. Optionally, when an element with a certain sequence number is removed from the linked list, the sequence number of all other remaining stream elements and new arriving stream elements is equal to or higher than the certain sequence number.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant sequence elements will be developed and the scope of the term sequence element is intended to include all such new technologies a priori.

As used herein the term "about" refers to ± 10 %.

The terms "comprises", "comprising", "includes", "including", "having" and their conjugates mean "including but not limited to". This term encompasses the terms "consisting of' and "consisting essentially of'.

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

## Claims

1. A network connected device (304), comprising:
a network interface (318) adapted to receive via a network (312) one or more streams where each stream contains a plurality of stream elements each marked with a sequence number;
a storage (306) storing a linked list (306B) holding stream elements sorted by their corresponding sequence number and a mapping dataset (306C), the mapping dataset comprises a plurality of dataset addresses each associated with a value and a corresponding pointer pointing to a position in the linked list that holds one of the stream elements;
a processing circuitry (302) adapted to add each of the plurality of stream elements to the linked-list (306B) by:
accessing a first of the plurality of dataset addresses which is equivalent to the respective sequence number,
updating a value addressed by the first dataset address when this value is not already updated to indicate a reception of a stream element with the respective sequence number,
when a copy of a stream element having the respective sequence number is missing from the linked-list (306B) adding a copy of the respective stream element to an ordered position in the linked-list (306B), the ordered position is determined according to the respective sequence number, and
**characterized in**:
when a copy of a stream element having the respective sequence number is in the linked-list (306B) adding a copy of the respective stream element to a derived position in the linked-list (306B), the derived position is determined according to the ordered position.

2. The network connected device (304) of claim 1, wherein the derived position is selected such that the copy of the respective stream element is the furthest element having the respective sequence.

3. The network connected device (304) of claim 1, wherein the mapping dataset (306C) is one of a plurality of mapping datasets (306C) and the plurality of stream elements are members of a sub group of a group of stream elements; wherein the processing circuitry (302) is adapted to select a first of the plurality of mapping datasets (306C), the first mapping dataset (306C) includes a database address that is equivalent to the respective sequence number; wherein the mapping dataset (306) is the first mapping dataset (306C).

4. The network connected device (304) of claim 1, wherein the value is a bitwise value and the mapping dataset is a bitmap.

5. The network connected device (304) of claim 4, wherein the bitmap is implemented by registers.

6. A method for reordering stream elements received over a network, comprising:
receiving a plurality of stream elements each marked with a sequence number and originated from one or more streams (402);
adding a copy of each of the plurality of stream elements to a linked-list such that the copies are sorted by their corresponding sequence number, the adding is performed by:
for each of the plurality of stream elements:
access a dataset address of a mapping dataset, the dataset address is equivalent to the respective sequence number (404),
update a value addressed by the dataset address when this value is not already updated to indicate a reception of a stream element with the respective sequence number (406),
when a copy of a stream element having the respective sequence number is missing from the linked-list adding a copy of the respective stream element to an ordered position in the linked-list (408), the ordered position is determined according to the respective sequence number, and
**characterized in:**
when a copy of a stream element having the respective sequence number is in the linked-list adding a copy of the respective stream element to a derived position in the linked-list (410), the derived position is determined according to the ordered position.

7. The method of claim 6, wherein the dataset address is associated with a pointer to the ordered position or the derived position.

## Patentansprüche

1. Netzwerkverbundene Vorrichtung (304), umfassend:
eine Netzwerkschnittstelle (318), die angepasst ist, um mittels eines Netzwerks (312) einen oder mehrere Streams zu empfangen, wobei jeder Stream eine Vielzahl von Stream-Elementen enthält, die jeweils mit einer Sequenznummer markiert sind;
einen Speicher (306), der eine verknüpfte Liste (306B) speichert, die nach ihrer entsprechenden Sequenznummer sortierte Stream-Elemente und einen Zuordnungsdatensatz (306C) enthält, wobei der Zuordnungsdatensatz eine Vielzahl von Datensatzadressen umfasst, von der jede mit einem Wert und einem entsprechenden Zeiger assoziiert ist, der auf eine Position in der verknüpften Liste zeigt, die eines der Stream-Elemente enthält;
eine Verarbeitungsschaltung (302), die angepasst ist, um jedes der Vielzahl von Stream-Elementen zu der verknüpften Liste (306B) hinzuzufügen durch:
Zugreifen auf eine erste der Vielzahl von Datensatzadressen, die der jeweiligen Sequenznummer äquivalent ist,
Aktualisieren eines durch die erste Datensatzadresse adressierten Werts, wenn dieser Wert nicht bereits aktualisiert ist, um einen Empfang eines Stream-Elements mit der jeweiligen Sequenznummer anzugeben,
wenn eine Kopie eines Stream-Elements mit der jeweiligen Sequenznummer in der verknüpften Liste (306B) fehlt, Hinzufügen einer Kopie des jeweiligen Stream-Elements zu einer geordneten Position in der verknüpften Liste (306B), wobei die geordnete Position gemäß der jeweiligen Sequenznummer bestimmt wird, und
**gekennzeichnet durch**:
wenn eine Kopie eines Stream-Elements mit der jeweiligen Sequenznummer in der verknüpften Liste (306B) vorliegt, Hinzufügen einer Kopie des jeweiligen Stream-Elements zu einer abgeleiteten Position in der verknüpften Liste (306B), wobei die abgeleitete Position gemäß der geordneten Position bestimmt wird.

2. Netzwerkverbundene Vorrichtung (304) nach Anspruch 1, wobei die abgeleitete Position so ausgewählt wird, dass die Kopie des jeweiligen Stream-Elements das am weitesten entfernte Element mit der jeweiligen Sequenz ist.

3. Netzwerkverbundene Vorrichtung (304) nach Anspruch 1, wobei der Zuordnungsdatensatz (306C) einer von einer Vielzahl von Zuordnungsdatensätzen (306C) ist und die Vielzahl von Stream-Elementen Mitglieder einer Untergruppe einer Gruppe von Stream-Elementen sind; wobei die Verarbeitungsschaltung (302) angepasst ist, um einen ersten der Vielzahl von Zuordnungsdatensätzen (306C) auszuwählen, wobei der erste Zuordnungsdatensatz (306C) eine Datenbankadresse einschließt, die der jeweiligen Sequenznummer äquivalent ist; wobei der Zuordnungsdatensatz (306) der erste Zuordnungsdatensatz (306C) ist.

4. Netzwerkverbundene Vorrichtung (304) nach Anspruch 1, wobei der Wert ein bitweiser Wert ist und der Zuordnungsdatensatz eine Bitmap ist.

5. Netzwerkverbundene Vorrichtung (304) nach Anspruch 4, wobei die Bitmap durch Register implementiert ist.

6. Verfahren zum Neuordnen von Stream-Elementen, die über ein Netzwerk empfangen werden, umfassend:
Empfangen einer Vielzahl von Stream-Elementen, die jeweils mit einer Sequenznummer markiert sind und aus einem oder mehreren Streams stammen (402);
Hinzufügen einer Kopie jedes der Vielzahl von Stream-Elementen zu einer verknüpften Liste, sodass die Kopien nach ihrer entsprechenden Sequenznummer sortiert werden, wobei das Hinzufügen durchgeführt wird durch:
für jedes der Vielzahl von Stream-Elementen:
Zugreifen auf eine Datensatzadresse eines Zuordnungsdatensatzes, wobei die Datensatzadresse der jeweiligen Sequenznummer äquivalent ist (404),
Aktualisieren eines durch die Datensatzadresse adressierten Werts, wenn dieser Wert nicht bereits aktualisiert ist, um einen Empfang eines Stream-Elements mit der jeweiligen Sequenznummer anzugeben (406),
wenn eine Kopie eines Stream-Elements mit der jeweiligen Sequenznummer in der verknüpften Liste fehlt, Hinzufügen einer Kopie des jeweiligen Stream-Elements zu einer geordneten Position in der verknüpften Liste (408), wobei die geordnete Position gemäß der jeweiligen Sequenznummer bestimmt wird, und
**gekennzeichnet durch**:
wenn eine Kopie eines Stream-Elements mit der jeweiligen Sequenznummer in der verknüpften Liste vorliegt, Hinzufügen einer Kopie des jeweiligen Stream-Elements zu einer abgeleiteten Position in der verknüpften Liste (410), wobei die abgeleitete Position gemäß der geordneten Position bestimmt wird.

7. Verfahren nach Anspruch 6, wobei die Datensatzadresse mit einem Zeiger auf die geordnete Position oder die abgeleitete Position assoziiert ist.

## Revendications

1. Dispositif connecté à un réseau (304), comprenant :
une interface réseau (318) adaptée pour recevoir via un réseau (312) un ou plusieurs flux où chaque flux contient une pluralité d'éléments de flux marqués chacun d'un numéro de séquence ;
un stockage (306) stockant une liste liée (306B) contenant des éléments de flux triés par leur numéro de séquence correspondant et un ensemble de données de mappage (306C), l'ensemble de données de mappage comprend une pluralité d'adresses d'ensemble de données associées chacune à une valeur et à un pointeur correspondant pointant vers une position dans la liste liée qui contient l'un des éléments de flux ;
un circuit de traitement (302) adapté pour ajouter chacun de la pluralité d'éléments de flux à la liste liée (306B) par :
l'accès à une première adresse de la pluralité d'adresses d'ensemble de données qui est équivalente au numéro de séquence respectif,
la mise à jour d'une valeur adressée par la première adresse d'ensemble de données lorsque cette valeur n'est pas déjà mise à jour pour indiquer une réception d'un élément de flux avec le numéro de séquence respectif,
lorsqu'un exemplaire d'un élément de flux ayant le numéro de séquence respectif est manquant dans la liste liée (306B), l'ajout d'un exemplaire de l'élément de flux respectif à une position ordonnée dans la liste liée (306B), la position ordonnée est déterminée selon le numéro de séquence respectif, et
**caractérisé en ce que** :
lorsqu'un exemplaire d'un élément de flux ayant le numéro de séquence respectif se trouve dans la liste liée (306B), l'ajout d'un exemplaire de l'élément de flux respectif à une position dérivée dans la liste liée (306B), la position dérivée est déterminée selon la position ordonnée.

2. Dispositif connecté à un réseau (304) selon la revendication 1, dans lequel la position dérivée est sélectionnée de sorte que l'exemplaire de l'élément de flux respectif soit l'élément le plus éloigné ayant la séquence respective.

3. Dispositif connecté à un réseau (304) selon la revendication 1, dans lequel l'ensemble de données de mappage (306C) est l'un d'une pluralité d'ensembles de données de mappage (306C) et la pluralité d'éléments de flux sont des membres d'un sous-groupe d'un groupe d'éléments de flux ; dans lequel le circuit de traitement (302) est adapté pour sélectionner un premier ensemble de la pluralité d'ensembles de données de mappage (306C), le premier ensemble de données de mappage (306C) comporte une adresse de base de données qui est équivalente au numéro de séquence respectif ; dans lequel l'ensemble de données de mappage (306) est le premier ensemble de données de mappage (306C).

4. Dispositif connecté à un réseau (304) selon la revendication 1, dans lequel la valeur est une valeur au niveau du bit et l'ensemble de données de mappage est une table de bits.

5. Dispositif connecté à un réseau (304) selon la revendication 4, dans lequel la table de bits est mise en œuvre par des registres.

6. Procédé de réorganisation d'éléments de flux reçus sur un réseau, comprenant :
la réception d'une pluralité d'éléments de flux marqués chacun d'un numéro de séquence et provenant d'un ou plusieurs flux (402) ;
l'ajout d'un exemplaire de chacun de la pluralité d'éléments de flux à une liste liée de sorte que les exemplaires soient triés par leur numéro de séquence correspondant, l'ajout est effectué par :
pour chacun de la pluralité d'éléments de flux :
l'accès à une adresse d'ensemble de données d'un ensemble de données de mappage, l'adresse d'ensemble de données est équivalente au numéro de séquence respectif (404),
la mise à jour d'une valeur adressée par l'adresse d'ensemble de données lorsque cette valeur n'est pas déjà mise à jour pour indiquer une réception d'un élément de flux avec le numéro de séquence respectif (406),
lorsqu'un exemplaire d'un élément de flux ayant le numéro de séquence respectif est manquant dans la liste liée, l'ajout d'un exemplaire de l'élément de flux respectif à une position ordonnée dans la liste liée (408), la position ordonnée est déterminée selon le numéro de séquence respectif, et
**caractérisé en ce que** :
lorsqu'un exemplaire d'un élément de flux ayant le numéro de séquence respectif se trouve dans la liste liée, l'ajout d'un exemplaire de l'élément de flux respectif à une position dérivée dans la liste liée (410), la position dérivée est déterminée selon la position ordonnée.

7. Procédé selon la revendication 6, dans lequel l'adresse d'ensemble de données est associée à un pointeur vers la position ordonnée ou la position dérivée.
